Europäisches Patentamt

European Patent Office

Office européen des brevets

(19)

(11) Veröffentlichungsnummer: **0 360 738**
**A1**

(12) # EUROPÄISCHE PATENTANMELDUNG

(21) Anmeldenummer: **89810638.0**

(22) Anmeldetag: **29.08.89**

(51) Int. Cl.5: **G 01 J 3/46**

(30) Priorität: **05.09.88 CH 3309/88**

(43) Veröffentlichungstag der Anmeldung:
**28.03.90 Patentblatt 90/13**

(84) Benannte Vertragsstaaten:
**AT CH DE ES FR GB IT LI**

(71) Anmelder: **CIBA-GEIGY AG**
**Klybeckstrasse 141**
**CH-4002 Basel (CH)**

(72) Erfinder: **Gerber, Werner Helmut, Dr.**
**Steingrubenweg 237**
**CH-4125 Riehen (CH)**

(54) **Verfahren und Vorrichtung zur Erstellung von Farbrezepten.**

(57) Es wird ein Verfahren und eine Vorrichtung zur Erstellung von Farbrezepten zur Nachstellung der Farbe einer Vorlage (6) beschrieben. Dabei wird bereits bei der Messung der Glanzanteil des reflektierten Lichtes durch Polarisationsfilter (5,7) unterdrückt, so dass die Berechnung der gesuchten Farbmittelkonzentration (i) unabhängig von der Beschaffenheit der Oberfläche der nachzustellenden Vorlage (6) (glänzend, halbglänzend, matt) mit einem Satz oberflächenbeschaffenheitsunabhängiger optischer Daten ($K_i$, $S_i$) der Farbmittel (i) erfolgen kann.

_Fig. 1_

EP 0 360 738 A1

Bundesdruckerei Berlin

**Beschreibung**

## Verfahren und Vorrichtung zur Erstellung von Farbrezepten

Die Erfindung betrifft ein Verfahren zur Erstellung von Farbrezepten gemäss Oberbegriff des Patentanspruches 1 und eine entsprechende Vorrichtung gemäss Oberbegriff des Patentanspruches 5.

Die Erstellung von Farbrezepten, d.h. die Berechnung von geeigneten Konzentrationen von Farbmitteln, insbesondere von Farbstoffen oder Pigmenten, zum Nachstellen der Farbe einer Vorlage ist eine der wichtigsten Aufgaben in der industriellen Verarbeitung von Farbmitteln. Insbesondere in der Textil-, Druck-, Automobil- und Kunststoffindustrie werden hohe Anforderungen an die Genauigkeit und Reproduzierbarkeit von Farben gestellt. Deshalb ist die industriell angewandte Farbmetrik für die Industrie zu einem überaus nützlichen und unentbehrlichen Instrument bei der Qualitätskontrolle farbiger Produkte und der dazu notwendigen Farbmittel (Farbstoffe, Pigmente) und zur Farbrezepterstellung geworden.

In einer Publikation von Dr. Ludwig Gall in "Farbe und Lack", 80 Jahrgang, Nr. 4, 1974, Seiten 297-306, ist das prinzipielle Verfahren zur Erstellung von Farbrezepten beschrieben. Die bezüglich ihrer Farbe nachzustellende Vorlage wird spektralphotometrisch analysiert, und die ermittelten Messdaten in einer Recheneinheit in Konzentrationsverhältnisse von Farbmitteln (Farbstoffe, Pigmente) bekannter optischer Daten, wie beispielsweise Absorptions- und Streukoeffizienten umgesetzt. Die Güte und die Genauigkeit der erstellten Farbmittelkonzentrationen hängt von der Genauigkeit der Kenntnis der optischen Daten der zur Auswahl stehenden Farbmittel ab. Zu diesem Zweck werden von jedem Farbmittel Eichfärbungen mit verschiedenen, genau bekannten Farbmittelkonzentrationen erstellt und spektralphotometrisch analysiert. Die wellenlängenabhängigen optischen Daten (Absorptions- und Streukoeffizient) jedes Farbmittels in Abhängigkeit von der Farbmittelkonzentration werden zur späteren Verwendung bei der Berechnung der Farbmittelkonzentration für die in ihrer Farbe nachzustellende Vorlage in einer Speichereinheit abgelegt.

Die Oberflächenbeschaffenheit des Prüflings (Eichfärbung, Vorlage, Nachstellung) beeinflusst ganz wesentlich die Messergebnisse und somit auch die optischen Daten und die ermittelten Farbmittelkonzentrationen. Diese Grenzflächeneffekte an der Grenzschicht zwischen umgebendem Medium und der Prüflingoberfläche sind allgemein als Glanzeinflüsse bekannt und äussern sich in einer mehr oder weniger glänzenden oder matten Oberfläche des Prüflings. Bei den üblicherweise verwendeten Integrationskugel-Messgeometrien (z.B. d/8, 8/d,..; die Zahl bzw. das Zeichen vor dem Schrägstrich bezieht sich auf den Winkel, den das einfallende Licht mit der Normalen auf die Prüflingsoberfläche einschliesst, die Zahl bzw. das Zeichen dahinter bezeichnet den Winkel zwischen reflektiertem Licht und der Normalen; d steht für diffus) wird der gesamte Glanzanteil am reflektierten Licht miterfasst. Dieser Glanzanteil wird in dem bislang am häufigsten angewandten Farbrezepterstellungsverfahren nach Kubelka-Munks Zweikonstantentheorie unter Einbeziehung der Saundersonschen Näherung (vgl. Publikation von Dr. Ludwig Gall in "Farbe und Lack", 80. Jahrgang, Nr. 4, 1974, Seiten 297-306 und Lehrgang Praktische Farbmessung, Bundesanstalt für Materialprüfung Berlin, DK 535.64/.65, Auflage 1982, Seiten 53 bis 57) dadurch berücksichtigt, dass je nach Oberflächenbeschaffenheit (eine Einteilung kann beispielsweise in glänzende, halbglänzende oder matte Obeflächenklassen erfolgen) der nachzustellenden Vorlage die Erstellung des Farbrezeptes unter Beiziehung eines entsprechenden Satzes optischer Daten der Farbmittel aus glänzenden, halbglänzenden oder matten Eichfärbungen erfolgt. Es ist also notwendig, für jede Art der Oberflächenbeschaffenheit einen eigenen wellenlängenabhängigen optischen Datensatz zu ermitteln. Dieses Erfordernis resultiert in einem enormen vorbereitenden Analyseaufwand aller zur Auswahl stehenden Farbmittel, da darüber hinaus jeder Eichfärbungs- und Messvorgang für jede Oberflächenklasse der Eichfärbungen bis fünfmal und öfter wiederholt wird, um eine ausreichende statistische Sicherheit zu gewährleisten. Verfahren, die im wesentlichen auf den Näherungen von Kubelka-Munk und Saunderson beruhen, sind beispielsweise in US-A-3,601,589 und in JP-A-62-90518 beschrieben. In der EP-A-065,484 und der DE-A-1,547,467 sind ein Remissions-Farb messgerät, respektive ein fotoelektrisches Farbhelligkeit = Vergleichsgerät beschrieben, bei denen direkte Oberflächenreflexionen durch gekreuzte Polarisatoren ausgeblendet werden.

Bei den bekannten Messgeräten kommen die unterschiedlichsten Messgeometrien zum Einsatz. In einer Publikation in "Color research and application, Volume 13, Number 2, April 1988, Seiten 113-118 beschreibt Danny C. Rich den Einfluss der Messgeometrie auf die Farbrezeptierung. Als Ergebnis eines Vergleichsversuches zwischen Integrationskugel-Geometrien und bidirektional gerichteten Geometrien, insbesondere 0/45 Geometrien, wie sie beispielsweise auch in der Deutschen Industrie Norm DIN 5033, Teil 7, Juli 1983 beschrieben sind, kommt er zu den Schluss, dass die 0/45 Geometrie (und damit die gleichwertige 45/0 Geometrie) der Integrationskugel-Geometrie (d/8) überlegen ist. Wie diese Vergleichsversuche von Rich zeigen, müssen auch bei bidirektional gerichteten Messverfahren die unterschiedlichen Prüflingsoberflächen durch eigene entsprechende oberflächenabhängige optische Datensätze der Farbmittel berücksichtigt werden.

Einen ersten Ansatz von diesem enormen vorbereitenden Analyseaufwand der Farbmittel wegzukommen, stellt ein nach der Dreistrahltheorie von Dr. H. Pauli und Dr. D. Eitle (vgl. Colour 73, Adam Hilger, London 1973, Seiten 423 bis 426 und den Sonderdruck eines diesbezüglichen Referats am XIV. FATIPEC Kongress, Budapest 1978, Seiten 209 bis 213) funktionierendes Rechenverfahren dar, welches den Glanzanteil nach empirischen Gesichtspunkten in der Berechnung der Farbmittelkonzentration berücksichtigt und demnach unabhängig von der Oberflächenbeschaffenheit der nachzustellenden farbigen Vorlage mit einem einzigen oberflächenbeschaffenheitsabhängigen Satz optischer Daten (wellenlängenabhängig) für die Farbmittel auskommt. Doch war es bislang auch bei diesem Verfahren notwendig, sowohl bei der Ermittlung der optischen Daten der Farbmittel als auch bei der Analyse der farbigen Vorlage den gesamten Glanzanteil mittels einer aufwendigen Integrationskugel-Messgeometrie zu erfassen.

Die vorstehend beschriebenen Verfahren zur Erstellung von Farbrezepten haben einerseits den Nachteil des grossen vorbereitenden Analyseaufwandes der Farbmittel, mit je nach Oberflächenbeschaffenheit der Vorlage unterschiedlichen wellenlängenabhängigen optischen Datensätzen der Farbmittel und des je nach Art der Messgeometrie unterschiedlichen Aufwandes im Messaufbau. Andererseits sind Integrationskugeln mit üblichen Durchmessern von bis etwa 20 cm und mehr zusammen mit der zugehörigen Peripherie (Recheneinheit etc.) sehr unhandlich und schwer und können nur stationär in einem zentralen Labor untergebracht sein. Dem gegenüber steht aber der Wunsch ein mobiles Messgerät und -Verfahren zur Verfügung zu haben, um "vor Ort" Messungen und Farbrezepterstellungen durchführen zu können.

Es besteht daher die Aufgabe ein Verfahren zur Erstellung von Farbrezepten bereitzustellen, bei dem unabhängig von der Beschaffenheit der Vorlagenoberfläche und der Art des angewandten Berechnungsverfahrens mit einem einzigen oberflächenbeschaffenheitsunabhängigen Satz optischer Daten (wellenlängenabhängig) der Farbmittel gearbeitet werden kann. Ueber diese universelle Einsetzbarkeit des Verfahrens hinaus soll auch die Voraussetzung geschaffen werden, das Verfahren mobil und "vor Ort" einsetzen zu können, soll also ein möglichst handlicher und transportabler Messaufbau gegeben sein.

Die Lösung dieser Aufgabe besteht in einer Verfahrensführung zur Erstellung von Farbrezepten unter besonderer Berücksichtigung der im kennzeichnenden Teil des Patentanspruches 1 angegebenen Schritte. Bevorzugte Varianten des Verfahrens sind Gegenstand der abhängigen Ansprüche.

Im folgenden wird das erfindungsgemässe Verfahren und die entsprechende Vorrichtung zur spektralphotometrischen Analyse von farbigen Prüflingen und zur Erstellung von Farbrezepten anhand der Zeichnung näher erläutert. Es zeigen:

Fig. 1 den prinzipiellen Aufbau eines Ausführungsbeispiels der erfindungsgemässen Vorrichtung,

Fig. 2 ein Prinzip-Ablaufidagramm der Bestimmung der optischen Daten der Farbmittel und

Fig. 3 ein Prinzip-Ablaufdiagramm der Erstellung der Farmittelkonzentrationen.

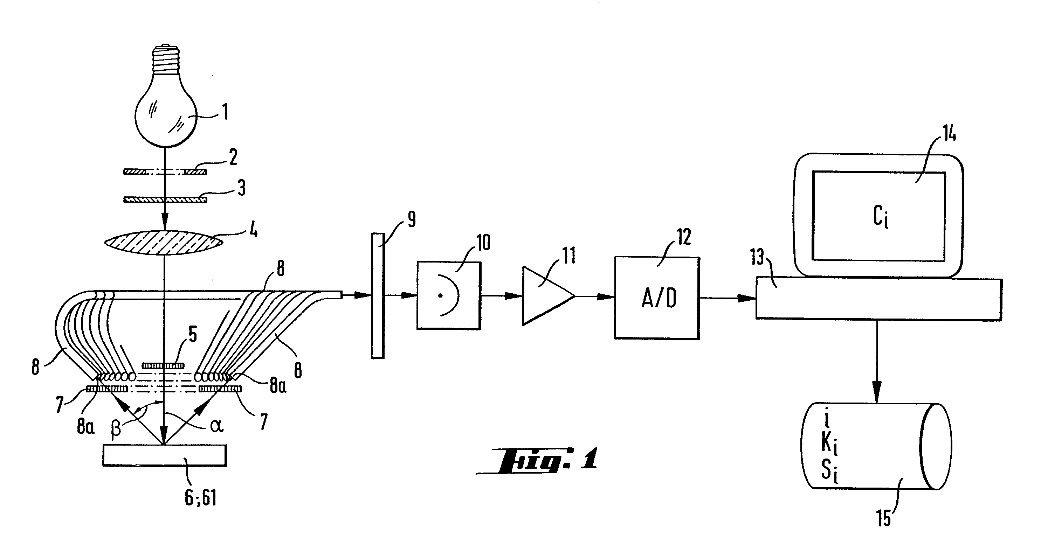

In Fig. 1 ist der prinzipielle Mess- und Analysenaufbau zur Erstellung von Farbrezepten dargestellt.

Es handelt sich dabei um eine sogenannte bidirektional gerichtete Messanordnung, insbesondere ist eine 0°/45° Messgeometrie dargestellt. Das heisst, dass das Messlicht unter einem Winkel von etwa 0° ± 10° zur Normalen auf einen Prüfling (z.B. eine Vorlage 6 oder eine Nachstellung 61) eingestrahlt wird und der unter einem Winkel β zur Normalen auf den Prüfling von etwa 45° ± 5° allseitig reflektierte Anteil erfasst und einem Detektor 10 zugeführt wird.

Der von einer polychromatischen Lichtquelle 1 ermittierte Lichtstrahl wird durch eine Blende 2 in seiner Weite begrenzt. Um mögliche Schwankungen in der spektralen Emission der Lichtquelle 1 zu kompensieren, wird das Messlicht durch ein Normfilter 3 geleitet, so dass das auf den Prüfling (z.B. die Vorlage 6 oder die Nachstellung 61) eingestrahlte Spektrum des Messlichtes eine definierte Zusammensetzung hat. Mittels einer Abbildungsoptik 4 wird die Lichtquelle 1 auf den Prüfling 6,61 abgebildet. Unmittelbar vor dem Prüfling 6,61 ist ein erster Polarisator 5 angeordnet, den der Messlichtstrahl passieren muss, so dass nur polarisiertes Messlicht unter einem Winkel $\alpha$ von 0° ± 10° zur Normalen auf den Prüfling 6,61 fällt. Vom allseitig reflektierten Licht wird gemäss dem Ausführungsbeispiel nur der unter einem Winkel β von etwa 45° ± 5° reflektierte Anteil erfasst. Dies erfolgt beispielsweise durch eine geeignete kreisringförmige Anordnung eines Lichtwellenleiterbündels 8. Unmittelbar vor dem Eintritt 8a in die einzelnen Fasern des Lichtwellenleiterbündels 8 ist ein vorzugsweise kreisringförmig ausgebildeter zweiter Polarisator 7 angeordnet, welcher als Analysator für das reflektierte Licht dient. Mit Hilfe dieses zweiten Polarisators 7 kann der von der Oberflächenbeschaffenheit des Prüflings 6,61 abhängige Glanzanteil des reflektieren Lichtes unterdrückt werden. Durch das Lichtleiterbündel 8 wird das reflektierte Licht zu einem wellenlängendispersiven Element 9 weitergeleitet. Dieses wellenlängendispersive Element 9 kann als Gitter, Filter oder auch als Prisma ausgebildet sein. Beim Durchtritt durch dieses wellenlängendispersive Element 9 wird das reflektierte Licht spektral zerlegt und unmittelbar dahinter von einem Detektor 10 erfasst. Dieser Detektor kann durch eine einzelne lichtempfindliche Photodiode gebildet sein, welche zur Erfassung der spektralen Komponenten des reflektierten Lichtes gescannt wird, er kann aber auch als linienförmige Anordnung mehrerer Photodioden ausgebildet sein.

Die vom Detektor gelieferten lichtwellenlängenabhängigen elektrischen Signale (Messerte R($\lambda$)) werden in einem Verstärker 11 verstärkt und einem Analog/Digital-Wandler 11 zugeführt.

Alle bislang beschriebenen Komponenten des Messaufbaus sind vorzugsweise in einem Messgerät vereinigt, welches eine vorzugsweise serielle Schnittstelle aufweist. Die Messgeometrie ist dabei nicht auf die in Fig. 1 beispielsweise dargestellte 0°/45° Geometrie eingeschränkt, sondern kann eine 45°/0° Geometrie sein, welche der visuellen Betrachtungsweise am nächsten kommt. Ein derartiges sehr kompaktes Spektralphotometer, das SPM 100, ist in einem Prospekt der Firma Gretag AG, Regensdorf/Zürich, Gretag 98.20.58 SP 8806 beschrieben.

Die digitalisierten Messergebnisse R(λ) werden in eine Recheneinheit 13 eingespeist und dort zusammen mit aus der spektralphotometrischen Analyse von Eichfärbungen ermittelten optischen Daten (Absorptionskoeffizient $K_i$ und Streukoeffizienz $S_i$) von zur Auswahl stehenden Farbmitteln i, welche in einer Speichereinheit 15 abgelegt sind, in Farbmittelkonzentrationen $C_i$ umgesetzt. Diese Farbmittelkonzentrationen $C_i$, als Endergebnis in der Folge noch zu beschreibender Berechnungsvorgänge, werden auf einer Ausgabeeinheit 14 (Bildschirm, Drucker etc.) aufgelistet und stellen das Farbrezept für die nachzustellende farbige Vorlage 6 dar.

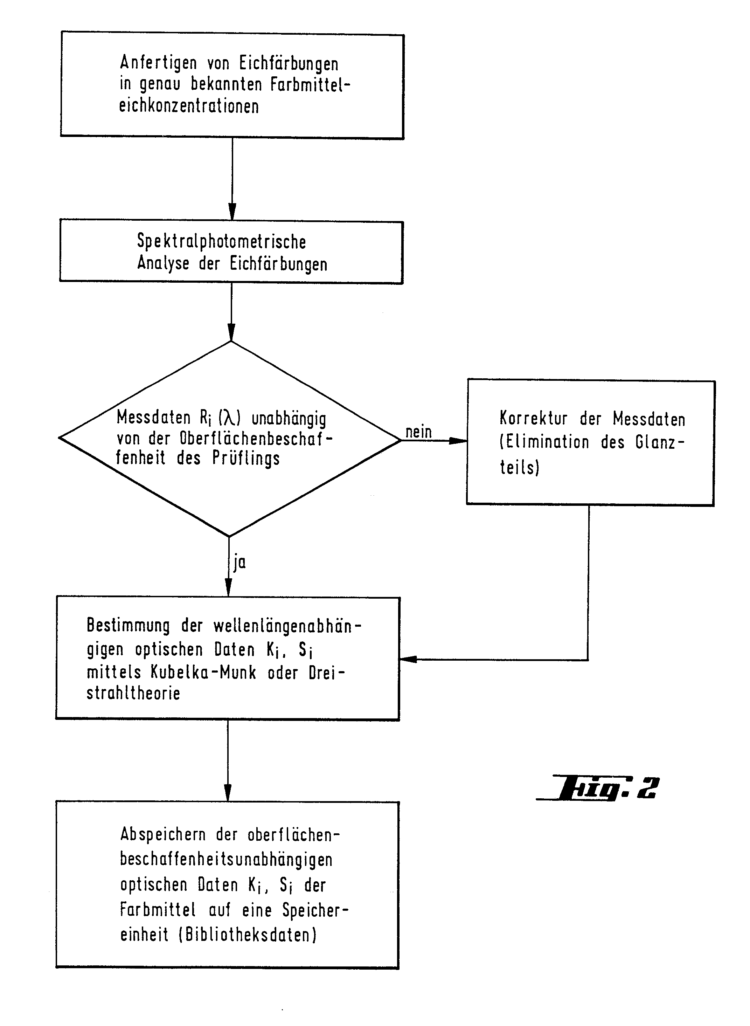

In Fig. 2 ist ein Prinzip-Ablaufdiagramm zur Bestimmung der optischen Daten (Absorptionskoeffizienten $K_i$ und Streukoeffizienz $S_i$) der Farbmittel i dargestellt. Von den zur Auswahl stehenden Farbmitteln i werden Eichfärbungen in genau bekannten Farbmitteleichkonzentrationen erstellt und spektralphotometrisch analysiert. Diese Analyse kann mit einem Messaufbau gemäss Fig. 1 geschehen, wobei der Glanzanteil des reflektierten Lichtes unterdrückt wird, sie kann aber auch mit herkömmlichen Integrationskugel-Geometrie erfolgen, wobei der Glanz mitgemessen wird, die Messergebnisse als abhängig von der Oberflächenbeschaffenheit des Prüflings (Eichfärbung) sind. Deshalb müssen diese auf herkömmliche Art ermittelten Messdaten vor ihrer weiteren Behandlung noch korrigiert werden. Die auf diese Weise oberflächenbeschaffenheitsunabhängigen Messwerte können nach unterschiedlichen Modellen weiterbehandelt werden. Ueblicherweise kommt die Zweikonstantentheorie von Kubelka-Munk zur Anwendung. Diese ist ebenfalls in o.g. Publikation der Bundesanstalt für Materialprüfung Berlin oder in einer Publikation von Dr. Ludwig Gall in Farbe und Lack, 80. Jahrgang, Nr. 4, 1974, Seiten 297-306 beschrieben. Einen besonders guten Kompromiss in der Genauigkeit zwischen der Zweikonstantentheorie und den weitere Einflussgrössen berücksichtigenden Mehrkonstantentheorien stellt die Dreistrahl-Theorie nach Dr. D. Eitle und Dr. H. Pauli dar, welche beispielsweise aus Colour 73, Adam Hilger, London 1973, Seiten 423 bis 426 und einem Sonderdruck eines Referats am XIV. FATIPEC Kongress, Budapest 1978, Seiten 209 bis 213 bekannt ist. Auf diese Weise erhält man wellenlängenabhängige optische Daten (Absorptionskoeffizienten $K_i$ und Streukoeffizienten $S_i$), welche nun aber oberflächenbeschaffenheitsunabhängig sind. Diese optischen Daten $K_i$, $S_i$ werden zur späteren Verwendung in einer Speichereinheit 15 als Bibliotheksdaten abgelegt.

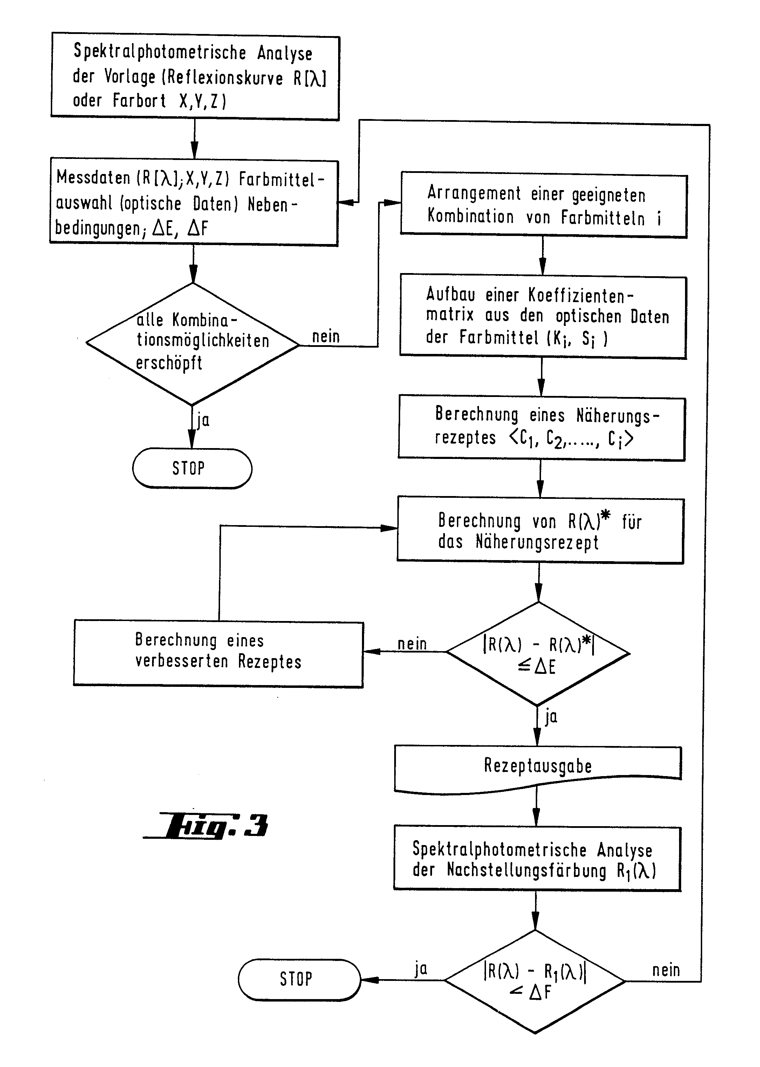

In Fig. 3 ist ein Prinzip-Ablaufdiagramm zur Erstellung von Farbrezepten dargestellt. Die spektralphotometrische Analyse der Vorlage 6 erfolgt in einer Messanordnung gemäss Fig. 1, oder vorzugsweise mit einem Spektralphotometer SPM 100 der Firma Gretag AG, Regendorf, Zürich. Die auf diese Weise ermittelten Messwerte (Reflektionskurve R(λ) oder auch Farbmasszahlen X, Y, Z) werden zusammen mit den oberflächenbeschaffenheitsunabhängigen optischen Daten $K_i$, $S_i$ der zur Auswahl stehenden Farbmittel i, Nebenbedingungen, wie die Art der zu bildenden Kombination (3er-, 4er- oder andere Kombination), Kombinationsvorschriften (nur Farbmittel i verschiedener Farbmittelgruppen) oder Kosten der Farbmittel i, sowie einem Iterationsschwellwert $\Delta E$ und einer Minimalfarbabweichung $\Delta F$ in die Recheneinheit eingespeist. Sind danach alle Kombinationsmöglichkeiten erschöpft, kann mit den zur Verfügung stehenden Farbmitteln i die Vorlage nicht nachgestellt werden. Dies wird jedoch üblicherweise nicht der Fall sein, und so besteht der nächste Schritt in der Kombination von geeigneten Farbmitteln und dem Aufbau einer Koeffizientenmatrix aus den bekannten optischen Daten $K_i$, $S_i$ der kombinierten Farbmittel i. Die Berechnung der Koeffizienten, vorzugsweise nach der Dreistrahltheorie liefert ein erstes Näherungsrezept $C_1$, $C_2$,..., $C_i$. Mit diesem Rezept wird eine fiktive Reflektionskurve R(λ)* berechnet und mit der an der Vorlage 6 gemessenen R(λ) verglichen. Ist der Differenzbetrag zwischen den beiden Reflektionskurven R(λ), R(λ)* grösser als der Iterationsschwellwert $\Delta E$, wird ein verbessertes Rezept berechnet und der Vorgang wiederholt. Ist der Differenzbetrag zwischen den beiden Reflektionskurven R(λ), R(λ)* kleiner oder gleich dem Iterationsschwellwert $\Delta E$, dann wird das Farbrezept C auf einer Ausgabeeinheit 14 ausgegeben. Nach diesem Farbrezept $C_1$, $C_2$,..., $C_i$ erfolgt die Nachstellungsfärbung. Der nachgestellte zweite Prüfling 61 wird wie die Vorlage spektralphotometrisch analysiert, und die daraus ermittelte zweite Reflektionskurve R1(λ) mit der Reflektionskurve R(λ) der Vorlage 6 verglichen. Unterschreitet die Differenz die vorgegebene Minimalfarbabweichung $\Delta F$, gilt die Nachstellung als geglückt, wenn nicht, müssen die Eingabedaten (z.B. Iterationsschwellwert $\Delta E$, Nebenbedingungen oder auch die Minimalfarbabweichung $\Delta F$) neu überprüft werden und der gesamte Vorgang wiederholt werden.

Insgesamt stellt das erfindungsgemässe Verfahren eine wesentliche Vereinfachung der Erstellung von Farbrezepten dar, indem bereits bei der Messung der Glanzanteil des reflektierten Lichtes unterdrückt wird und mit einem einzigen Satz oberflächenbeschaffenheitsunabhängigen optischen Daten $K_i$, $S_i$ der Farbmittel i gearbeitet werden kann. Bei Verwendung des Spektralphotometers SPM 100 der Firma Gretag AG, Regensdorf/Zürich als Analysegerät ergeben sich zudem grosse Vorteile im Handling. Der gesamte Messaufbau inklusive Rechen-, Speicher- und Ausgabeeinheit ist leicht transportabel, universell und vor allem dezentral vor Ort einsetzbar.

**Patentansprüche**

1. Verfahren zur Erstellung von Farbrezepten zur Nachstellung der Farbe einer Vorlage (6) durch Zusammenmischen geeigneter Konzentrationen ($C_i$) von Farbmitteln (2), insbesondere Farbstoffen und Pigmenten, wobei die Vorlage (6) von einer Lichtquelle (1) gerichtet mit Messlicht beaufschlagt wird, und das von der Vorlage (6) gerichtet reflektierte Licht nach spektraler Zerlegung einem Detektor (10) zugeführt wird, der daraus spektrale Messdaten (R(λ)) erzeugt, die Messdaten (R(λ) in einer Recheneinheit (13) in die Konzentrationen ($C_i$) von Farbmitteln (i) bekannter optischer Daten ($K_i$, $S_i$), welche zuvor aus Eichfärbungen mit bekannten Farbmitteleichkonzentrationen gleichfalls durch spektralphotometrische Analyse ermittelt wurden, umgesetzt werden, ein nach den berechneten Farbmittelkonzentrationen ($C_i$) nachgestellter Prüfling (61) spektralphotometrisch mit der Vorlage (6) verglichen wird, die Farbmittelkonzentrationen ($C_i$) nach Massgabe der gemessenen Unterschiede korrigiert werden, und dieser Korrekturvorgang ggf. so oft wiederholt wird, bis eine vorgegebene Minimalfarbabweichung ($\Delta F$) unterschritten ist, dadurch gekennzeichnet, dass das Messlicht vor dem Auftreffen auf den Prüfling (6,61) in einem ersten Polarisator (5) polarisiert wird, dass das reflektierte Licht vor seiner spektralen Zerlegung mittels eines wellenlängendispersiven Elementes (9) durch einen als Analysator dienenden zweiten Polarisator (7) geleitet wird, und dass zur Bestimmung der gesuchten Farbmittelkonzentrationen ($C_i$) optische Daten ($K_i$, $S_i$) der Farbmittel (i) verwendet werden, welche oberflächenbeschaffenheitsunabhängig sind.

2. Verfahren nach Anspruch 1, dadurch gekennzeichnet, dass die optischen Daten ($K_i$, $S_i$) der Farbmittel (i) aus Messdaten ermittelt werden, welche aus einer spektralphotometrischen Analyse der Farbmittel mit polarisiertem Messlicht und polarisiertem reflektiertem Licht gewonnen werden.

3. Verfahren nach Anspruch 1 oder 2, dadurch gekennzeichnet, dass das Messlicht unter einem Winkel ($\alpha$) von etwa 0° ± 10° gegen die Normale auf den Prüfling (6,61) eingestrahlt wird, und dass das unter einem Winkel ($\beta$) von etwa 45° ± 5° gegen die Normale auf den Prüfling (6,61) reflektierte Licht erfasst wird und auf den Detektor (10) geleitet wird.

4. Verfahren nach Anspruch 1 oder 2, dadurch gekennzeichnet, dass das Messlicht unter einem Winkel ($\alpha$) von etwa 45° ± 5° gegen die Normale auf den Prüfling (6,61) eingestrahlt wird, und dass das unter einem Winkel ($\beta$) von etwa 0° ± 10° gegen die Normale auf den Prüflig (6,61) reflektierte Licht erfasst wird und auf den Detektor (10) geleitet wird.

5. Vorichtung zur Durchführung des Verfahrens nach Anspruch 1, mit einem Spektralphotometer, welches über eine vorzugsweise serielle Schnittstelle an eine Recheneinheit (13) mit Ausgabe- (14) und Speichereinheit (15) gekoppelt ist, dadurch gekennzeichnet, dass das Spektralphotometer mit einem ersten (5) und einem zweiten Polarisator (7) ausgestattet ist, wobei der erste Polarisator (5) im Strahlengang des Messlichtes vor dem Prüfling (beispielsweise der Vorlage 6 oder einer Nachstellung 61) und der zweite Polarisator (7) im Strahlengang des reflektierten Lichtes vor einem wellenlängendispersiven Element (9) angeordnet ist.

*Fig. 1*

EP 0 360 738 A1

Anfertigen von Eichfärbungen
in genau bekannten Farbmitteleichkonzentrationen

Spektralphotometrische
Analyse der Eichfärbungen

Messdaten $R_i (\lambda)$ unabhängig
von der Oberflächenbeschaffenheit des Prüflings

nein

Korrektur der Messdaten
(Elimination des Glanzteils)

ja

Bestimmung der wellenlängenabhängigen optischen Daten $K_i$, $S_i$
mittels Kubelka-Munk oder Dreistrahltheorie

Abspeichern der oberflächenbeschaffenheitsunabhängigen
optischen Daten $K_i$, $S_i$ der
Farbmittel auf eine Speichereinheit (Bibliotheksdaten)

*Fig. 2*

Spektralphotometrische Analyse der Vorlage (Reflexionskurve $R[\lambda]$ oder Farbort $X,Y,Z$ )

Messdaten $(R[\lambda]; X,Y,Z)$ Farbmittel- auswahl (optische Daten) Neben- bedingungen; $\Delta E$, $\Delta F$

alle Kombina- tionsmöglichkeiten erschöpft

nein

ja

STOP

Arrangement einer geeigneten Kombination von Farbmitteln i

Aufbau einer Koeffizienten- matrix aus den optischen Daten der Farbmittel $(K_i, S_i)$

Berechnung eines Näherungs- rezeptes $\langle C_1, C_2, ....., C_i \rangle$

Berechnung von $R(\lambda)^*$ für das Näherungsrezept

Berechnung eines verbesserten Rezeptes

nein

$|R(\lambda) - R(\lambda)^*| \leqq \Delta E$

ja

Rezeptausgabe

Spektralphotometrische Analyse der Nachstellungsfärbung $R_1(\lambda)$

STOP

ja

$|R(\lambda) - R_1(\lambda)| < \Delta F$

nein

**Fig. 3**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | US-A-3 601 589 (McCARTY) <br> * Figur 1; Zusammenfassung * <br> --- | 1,2,5 | G 01 J 3/46 |
| D,Y | DE-A-1 547 467 (WIPFLER) <br> * Seite 6, Zeilen 1-15 * <br> --- | 1,2,5 | |
| D,A | PATENT ABSTRACTS OF JAPAN, Band 11, Nr. 298 (P-620)[2745], 26. September 1987, Seite 83 P 620; & JP-A-62 90 518 (SUGA SHIKENKI K.K.) 25-04-1987 <br> --- | 1,5 | |
| D,A | EP-A-0 065 484 (GRETAG) <br> * Zusammenfassung; Figuren 1,3 * <br> --- | 1-3,5 | |
| D,A | DEUTSCHE NORM, DIN 5033, Teil 7, Juli 1983, Seiten 1-8, Berlin, DE; DK535.65.08:535.661:535.625: "Farbmessung: Messbedingungen für Körperfarben" <br> * Seite 6, rechte Spale, Zeile 10 – Seite 7, linke Spalte, Zeile 3 * <br> --- | 3,4 | |
| D,A | IBM TECHNICAL DISCLOSURE BULLETIN, Band 27, Nr. 9, Februar 1985, Seiten 5472-5473, New York, US; W. JAERISCH et al.: "Inspecting scattering pattern carriers with enhanced optical contrast" <br> ----- | | **RECHERCHIERTE SACHGEBIETE (Int. Cl.5)** <br><br> G 01 J <br> G 01 N |

Der vorliegende Recherchenbericht wurde für alle Patentansprüche erstellt

| Recherchenort | Abschlußdatum der Recherche | Prüfer |
|---|---|---|
| DEN HAAG | 18-12-1989 | KLEIKAMP B.M.H.H. |